# EUROPÄISCHE PATENTSCHRIFT

(11) **EP 0 726 801 B1**
(45) Veröffentlichungstag und Bekanntmachung des Hinweises auf die Patenterteilung: **19.01.2000**
(21) Anmeldenummer: 94931492.6
(22) Anmeldetag: 27.10.1994
(51) Int. Cl.: B01D 15/02, C07D 305/14

(54) **VERFAHREN ZUM AUFTRENNEN EINES GEMISCHES**
PROCESS FOR SEPARATING A MIXTURE
PROCEDE POUR LA SEPARATION D'UN MELANGE

(30) Priorität: 02.11.1993 DE 4337289
(43) Veröffentlichungstag der Anmeldung: 21.08.1996
(73) Patentinhaber: RHONE-POULENC RORER GMBH, 50792 Köln (DE)
(72) Erfinder: ULBRICH, Bernhard, D-50189 Elsdorf (DE); JENDRNY, Heinz, D-41539 Dormagen (DE)
(74) Vertreter: Lau-Loskill, Philipp, Dipl.-Phys.
(86) Internationale Anmeldenummer: DE9401270
(87) Internationale Veröffentlichungsnummer: WO9512445

(56) Entgegenhaltungen:
- EP-A- 0 495 640
- WO-A-92/07842
- US-A- 2 678 132
- US-A- 2 738 880
- US-A- 4 758 349
- US-A- 4 761 236

## Beschreibung

Die vorliegende Erfindung betrifft ein Verfahren zum Auftrennen eines mindestens zwei Bestandteile aufweisenden Gemisches mit den Merkmalen des Oberbegriffs des Patentanspruchs 1.

Um mindestens zwei Bestandteile aufweisende Gemische aufzutrennen, ist es bekannt, eine Trennphase, die üblicherweise auch als stationäre Phase bezeichnet wird, mit dem zu trennenden Gemisch zu beaufschlagen und anschließend die mit dem Gemisch beladene Phase mit mindestens einem Fluid zu eluieren. Handelt es sich bei den aufzutrennenden Bestandteilen um solche Bestandteile, die ohne Zersetzung in die Gasphase überführt werden können, so erfolgt die zuvor beschriebene bekannte Trennung auf gaschromatographischem Wege, d.h. das zu trennende Gemisch und das zur Eluierung eingesetzte Fluid sind beides Gase. Bei der säulenchromatographischen Trennung, die sich insbesondere auch für die Auftrennung von solchen Gemischen eignet, deren Bestandteile ohne Zersetzung oder chemische Veränderungen nicht in die Gasphase übergeführt werden können, wird die in einer Säule angeordnete Trennphase (stationäre Phase) nach deren Beaufschlagung mit dem Gemisch mit einer Flüssigkeit oder einem Flüssigkeitsgemisch eluiert. Diese Methode kann nicht nur zur Auftrennung von Gemischen zum Zwecke der Analytik angewendet werden, sondern auch großtechnisch zur präparativen Isolierung von entsprechend aufgetrennten Bestandteilen. Desweiteren läßt sich die säulenchromatographische Arbeitsweise auch für die Reinigung von Substanzen anwenden.

Der Nachteil der zuvor beschriebenen präparativen säulenchromatographischen Arbeitsweise ist darin zu sehen, daß es hiermit nicht möglich ist, kontinuierlich eine Auftrennung und Isolierung von bestimmten Bestandteilen aus dem Gemisch zu erreichen. Vielmehr erlaubt die säulenchromatographische präparative Arbeitsweise nur einen diskontinuierlichen, chargenweise Betrieb, d.h. zunächst muß die mit dem aufzutrennenden Gemisch beladene Trennphase vollständig mit dem Fluid eluiert und ggf. regeneriert werden, um dann anschließend erneut mit dem zu trennenden Gemisch beaufschlagt zu werden. Eine derartige batch-Arbeitsweise ist jedoch mit relativ hohen Kosten verbunden.

So beschreiben die WO 92/07842 A und die US 4,758,349 chargenweise arbeitende Trennverfahren, wobei die WO 92/07482 A auf ein hochdruck-flüssigkeitschromatographisches Trennverfahren und die US 4,758,349 A auf ein diskontinuierlich arbeitendes, eine Vielzahl von Säulen verwendendes Trennverfahren zurückgreifen.

Aus der US 2,738,880 A ist ein Trennverfahren bekannt, bei dem mit einem Förderband gearbeitet wird, wobei das Förderband die für die Trennung verwendete spezielle stationäre Phase transportiert. Diese stationäre Phase weist bei dem bekannten Verfahren einen mehrschichtigen Aufbau auf, wobei die erste Schicht aus einem Gemisch aus einem Adsorptionsmaterial und einem Paraffin-Kohlenwasserstoff besteht. Auf diese erste Schicht wird dann eine zweite Schicht angeordnet, wobei die zweite Schicht bereits einen Teil des zu trennenden Gemisches enthält. Auf sie so hergestellte stationäre Phase wird dann zusätzlich noch das aufzutrennende Gemisch aufgetragen.

Ein Verfahren mit den Merkmalen des Oberbegriffs des Patentanspruchs 1 ist aus der US 2,678,132 A bekannt. Hierbei wird bei dem bekannten Verfahren das aufzutrennende Gemisch auf eine auf einem Förderband angeordnete feste Trennphase derart aufgetragen, daß das zu trennende Gemisch die Trennphase vollständig über ihre Dicke gesehen netzt. Durch eine geneigt angeordnete Ausrichtung des Transportbandes mit der darauf angeordneten Trennphase erfolgt dann bei dem bekannten Verfahren die Auftrennung des zu trennenden Gemisches in Einzelbestandteile derart, daß die beladene Trennphase mit einem Fluid eluiert wird, wodurch die von Trennphase nicht adsorbierten Bestandteile des zu trennenden Gemisches durch das Fluid abgeschwemmt werden.

Der vorliegenden Erfindung liegt die Aufgabe zugrunde, ein Verfahren der angegebenen Art zur Verfügung zu stellen, das eine kontinuierliche Auftrennung eines aus mindestens zwei Bestandteilen bestehenden Gemisches erlaubt.

Diese Aufgabe wird erfindungsgemäß durch ein Verfahren mit den kennzeichnenden Merkmalen des Patentanspruchs 1 gelöst.

Das erfindungsgemäße Verfahren zum Auftrennen eines mindestens zwei Bestandteile aufweisenden Gemisches sieht vor, daß eine auf einem Förderband angeordnete feste Trennphase mit dem zu trennenden Gemisch beaufschlagt und anschließend die mit dem Gemisch beladene Trennphase mit mindestens einem Fluid eluiert wird. Hierbei wird die Trennphase von einer ersten Station, in der sie mit dem zu trennenden Gemisch beaufschlagt wird, zu mindestens einer zweiten Station, in der die Trennphase mit dem mindestens Fluid eluiert wird, mittels eines Förderbandes transportiert, wobei die Trennphase kontinuierlich mit dem zu trennenden Gemisch beladen und ebenfalls kontinuierlich mit dem Fluid eluiert wird. Die feste Trennphase wird bei dem erfindungsgemäßen Verfahren auf dem horizontalen Förderband in einer Schichtdicke zwischen 0,1 cm und 30 cm, vorzugsweise zwischen 2 cm und 15 cm, angeordnet, wobei in der ersten Station nur so viel von der Lösung, Dispersion und/oder Emulsion des zu trennenden Gemisches auf die horizontal vorliegende Trennphase aufgebracht wird, daß die Lösung, Dispersion und/oder Emulsion des zu trennenden Gemisches über die Dicke der Trennphase gesehen nur den äußeren oberen Bereich der Trennphase netzt. Dies führt dann dazu, daß bei dem erfindungsgemäßen Verfahren im Gegensatz zum zuvor genannten Stand der Technik das zu trennende Gemisch nur etwa 5 % bis 25 % der Schichtdicke der Trennphase einnimmt, wobei beim erfindungsgemäßen Verfahren als zu trennendes Gemisch ein Extrakt eines Naturstoffes eingesetzt wird.

Das erfindungsgemäße Verfahren weist eine Reihe von Vorteilen auf. So ist zunächst als ein wesentlicher Vorteil herauszustellen, daß das erfindungsgemäße Verfahren eine kontinuierliche Arbeitsweise bei der Auftrennung des Gemisches, insbesondere auch bei der Auftrennung eines Vielkomponenten-Gemisches, erlaubt, und insbesondere dann besonders vorteilhaft ist, wenn das erfindungsgemäße Verfahren zur Isolierung von größeren Mengen Einzelbestandteile, die in dem zu trennenden Gemisch enthalten sind, eingesetzt wird. Dies führt nicht nur zu einer erheblichen Erhöhung des Mengenausstoßes an in dem Gemisch enthaltenen einzelnen Bestandteilen, sondern bewirkt gleichzeitig auch eine deutliche Produktionssteigerung, ohne daß es hierzu erforderlich ist, aufwendige Vorrichtungen zu installieren. Bedingt dadurch wird es erklärlich, daß das erfindungsgemäße Verfahren die Kosten für die Isolierung von Einzelbestandteilen aus dem Gemisch drastisch senkt. Auch ist es möglich, das erfindungsgemäße Verfahren vollautomatisch durchzuführen, da es hierzu lediglich erforderlich ist, die Transportgeschwindigkeit der Trennphase an die Beladungsgeschwindigkeit sowie die Eluierungsgeschwindigkeit anzupassen. Darüber hinaus ist es mit besonders einfachen Mitteln möglich, unerwünschte Nebenreaktionen, wie beispielsweise eine Oxidation der Einzelbestandteile des Gemisches, zu verhindern, da es hierfür lediglich erforderlich ist, die Beladung der Trennphase, ihren Transport von der ersten in die zweite Station bzw. die sich hieran anschließenden weiteren Stationen und/oder die Eluierung der Trennphase in der zweiten Station bzw. den weiteren Stationen in einer entsprechenden Atmosphäre, insbesondere in einer Inertgasatmosphäre oder unter Vakuum, durchzuführen. Dies wiederum führt dazu, daß die nach dem erfindungsgemäßen Verfahren isolierten Einzelbestandteile des Gemisches vorzugsweise frei von unerwünschten Nebenprodukten, die durch eine chemische Reaktion der Einzelbestandteile mit der Umgebungsatmosphäre entstehen, sind, so daß nach dem erfindungsgemäßen Verfahren hochreine Einzelbestandteile mit einem hohen Mengenausstoß isoliert werden können. Außerdem erlaubt das erfindungsgemäße Verfahren, in jeder einzelnen Station eine für die Trennung optimale Temperatur sowie eine für die Trennung optimale Zusammensetzung des in dieser Station eingesetzten Eluierungsfluids, angepaßt an den bzw. die in dieser Station abzutrennenden Einzelbestandteil bzw. Einzelbestandteile des Gemisches, einzustellen, was bei der bekannten säulenchromatografischen Arbeitsweise nicht möglich ist.

Das bei dem erfindungsgemäßen Verfahren vorgesehene relativ geringe Eindringen des zu trennenden Gemisches in die Trennphase stellt sicher, daß das zu trennende Gemisch einwandfrei bei der anschließenden Eluierung mit dem Fluid, insbesondere dem organischen Lösungsmittel, aufgetrennt wird, so daß dementsprechend besonders reine Fraktionen der einzelnen Bestandteile isoliert werden können.

Überraschend konnte festgestellt werden, daß sich das zuvor beschriebene erfindungsgemäße Verfahren besonders dann eignet, wenn das zu trennende Gemisch ein Extrakt eines Naturstoffes ist. Aus einem derartigen Naturstoff-Extrakt lassen sich dann besonders schnell, wirtschaftlich und mit hoher Reinheit durch Anwendung des erfindungsgemäßen Verfahrens Einzelbestandteile oder vorgegebene Fraktionen isolieren.

Eine besonders geeignete Weiterbildung des zuvor beschriebenen erfindungsgemäßen Verfahrens sieht vor, daß hierbei die feste Trennphase mittels eines endlosen Förderbandes von der ersten Station (Beladungsstation) in die zweite Station (Eluierungsstation) transportiert wird.

Abhängig von der jeweils verwendeten festen Trennphase, d.h. insbesondere dem chemischen Aufbau und der Korngröße der Trennphase, richtet sich bei dem erfindungsgemäßen Verfahren auch die Auswahl des Förderbandes. So werden hierfür beispielsweise Förderbänder eingesetzt, die Gewebe aus Metallfasern, Polyalkylenfasern, Polyesterfasern, Polyamidfasern und aromatischen Polyamidfasern darstellen, wobei die mesh-Werte derartiger Förderbänder vorzugsweise zwischen 20 mesh und 270 mesh, insbesondere zwischen 60 mesh und 200 mesh variieren. Derartige Förderbänder stellen sicher, daß einerseits keine unerwünschten Veränderungen der aufgetrennten Einzelbestandteile bedingt durch eine chemische Veränderung des Materials der Förderbänder auftreten und andererseits das für die Eluierung eingesetzte Fluid das Förderband noch einwandfrei durchdringt.

Um das zu trennende Gemisch mit der Trennphase in Kontakt zu bringen, wird bei dem erfindungsgemäßen Verfahren das zu trennende Gemisch mit einem geeigneten Fluid, insbesondere einem organischen Lösungsmittel, gelöst, dispergiert und/oder emulgiert. Anschließend wird diese Lösung, Dispersion und/oder Emulsion bevorzugt auf die Trennphase aufgesprüht.

Eine andere Ausführungsform des erfindungsgemäßen Verfahrens sieht vor, daß zwischen der ersten Station, in der die Beladung der Trennphase mit dem zu trennenden Gemisch erfolgt, und der zweiten Station, in der die mit dem Gemisch beaufschlagte Trennphase mit dem Fluid, insbesondere einem organischen Lösungsmittel, eluiert wird, eine Trocknung der Trennphase erfolgt. Mit anderen Worten wird somit beim Transport der Trennphase von der ersten Station in die zweite Station das für das Auftragen des zu trennenden Gemisches eingesetzte Fluid, insbesondere organische Lösungsmittel, durch die kontinuierliche Trocknung der Trennphase ausgetrieben, so daß dementsprechend eine getrocknete Trennphase in der zweiten Station mit dem Fluid, insbesondere einem organischen Lösungsmittel oder Lösungsmittelgemisch, eluiert wird. Eine derartige Variante des erfindungsgemäßen Verfahrens verbessert die Trennleistung und führt somit zu besonders reinen Fraktionen der Einzelbestandteile des Gemisches. Weiterhin wird diese Ausführungsvariante des erfindungsgemäßen Verfahrens immer dann angewendet, wenn das zur Herstellung der Lösung, Dispersion und/oder Emulsion des zu trennenden Gemisches eingesetzte Fluid nicht mit dem Fluid, das zur anschließenden Eluierung in der zweiten Station eingesetzt wird, mischbar oder verträglich ist.

Sollen nach dem erfindungsgemäßen Verfahren solche Gemische aufgetrennt werden, die mehr als zwei Bestandteile oder mehr als zwei Fraktionen aufweisen, so bietet es sich an, in Anschluß an die zweite Station eine Vielzahl von weiteren Stationen vorzusehen, in die die mit dem zu trennenden Gemisch beladene Trennphase transportiert und dort entsprechend in jeder einzelnen Station eluiert wird. Die Anzahl dieser weiteren Stationen richtet sich nach der Anzahl der abzutrennenden Bestandteile bzw. abzutrennenden Fraktionen. Wird beispielsweise nach dem erfindungsgemäßen Verfahren ein Gemisch aufgetrennt, das fünf Bestandteile bzw. fünf Fraktionen aufweist, so sind hierfür dementsprechend auch fünf Stationen für die Eluierung der Trennphase erforderlich, d.h. neben der zweiten Station auch vier weitere Stationen. Allgemein gesprochen bedeutet dies, daß die Anzahl der Eluierungsstationen, d.h. somit die Anzahl der zweiten Station sowie der weiteren Stationen, der Anzahl der abzutrennenden Einzelbestandteile und/oder der Anzahl der abzutrennenden Fraktionen des zu trennenden Gemisches entspricht, sofern bei der erfindungsgemäßen Trennung alle Bestandteile aufgetrennt bzw. alle Fraktionen abgetrennt werden sollen.

Bei dem erfindungsgemäßen Verfahren kann bei der Durchführung des erfindungsgemäßen Verfahrens die Trennphase während ihres Transportes mit einem Inertgas umspült werden, so daß dementsprechend eine besonders schonende Trennung und Isolierung in die Einzelbestandteile des Gemisches erfolgt. Desweiteren verhindert die Umspülung mit dem Inertgas, daß explosive Gasgemische dann entstehen, wenn das Auftragen und/oder Eluieren mit solchen Flüssigkeiten vorgenommen wird, die leicht verdampfen und somit mit der vorhandenen Luft entsprechende explosive und/oder toxische Luft-Fluiddampfgemische ergeben. Als Inertgas werden bei dem erfindungsgemäßen Verfahren vorzugsweise Stickstoff, Kohlendioxid und/oder Edelgase sowie Mischungen der zuvor genannten Gase eingesetzt.

Abhängig von dem jeweils ausgewählten Material der Trennphase sowie dem jeweils zu trennenden Gemisch kann die Trennphase nach der Eluierung und Trocknung verworfen werden. Besonders geeignet ist es jedoch, wenn die Trennphase nach Abschluß der Eluierung regeneriert und ggf. getrocknet wird und hiernach erneut im Kreislauf gefahren und wiederverwendet wird. Diese Ausführungsvariante des erfindungsgemäßen Verfahrens zeichnet sich durch eine hohe Wirtschaftlichkeit aus und ist darüber hinaus besonders umweltfreundlich.

Grundsätzlich kann bei dem erfindungsgemäßen Verfahren als Trennphase jedes Material eingesetzt werden, das auch in der herkömmlichen präparativen Säulenchromatographie verwendet wird. Insbesondere werden bei dem erfindungsgemäßen Verfahren jedoch Kieselgel, Kieselgur und/oder Aluminiumoxid eingesetzt, wobei abhängig von dem jeweiligen Trennproblem die Korngröße der zuvor genannten speziellen Trennphasen zwischen 30 µm und 500 µm variieren.

Um bei dem erfindungsgemäßen Verfahren die Trennung des Gemisches zu beschleunigen, besteht grundsätzlich die Möglichkeit, beim Auftragen des aufzutrennenden Gemisches und/oder bei der Eluierung das jeweils hierfür eingesetzte Fluid unter Überdruck anzuwenden. Besonders geeignet ist es jedoch, wenn sowohl die Beaufschlagung der Trennphase mit dem zu trennenden Gemisch und/oder die Eluierung der mit dem Gemisch beaufschlagten Trennphase mit dem Fluid unter Unterdruck durchzuführen, zumal hierdurch ggf. auch ohne Zuführung eines Inertgases die Möglichkeit eröffnet wird, wirkungsvoll explosive Luft-Fluiddampfgemische zu verhindern.

Insbesondere wird bei dem erfindungsgemäßen Verfahren als zu trennendes Gemisch ein Pflanzenextrakt verwendet, wobei jedoch selbstverständlich auch ein solcher Extrakt eingesetzt werden kann, der durch Extraktion von tierischen Bestandteilen, beispielsweise Eiern o. dgl., gewonnen wurde.

Eine besonders geeignete Ausführungsform des erfindungsgemäßen Verfahrens sieht vor, daß bei dem erfindungsgemäßen Verfahren als zu trennendes Gemisch ein Extrakt, gewonnen durch Extraktion von Bestandteilen der Eibenpflanze, vorzugsweise gewonnen durch Extraktion von Eibennadeln oder Rinde der Eibe, eingesetzt wird. Hierbei konnte festgestellt werden, daß sich aus einem derartigen Vielkomponenten-Gemisch bevorzugt ein erwünschter Einzelbestandteil, insbesondere das 10-Deacetylbaccatin III, durch Anwendung des erfindungsgemäßen Verfahrens mit einer hohen Reinheit, insbesondere in einer Reinheit von mehr als 80 Gew.% und vorzugsweise zwischen 92 Gew.% und 98 Gew.%, besonders wirtschaftlich und schonend isolieren läßt, was bei dem bekannten säulenchromatografischen Verfahren nicht der Fall ist.

Insbesondere wird bei der zuvor beschriebenen Ausführungsform des erfindungsgemäßen Verfahrens, bei dem als zu trennendes Gemisch der zuvor genannte Extrakt, gewonnen aus Bestandteilen der Eibenpflanze und vorzugsweise aus Eibennadeln zusammen mit einem Lösungsmittel, insbesondere Butylacetat, auf die Trennphase aufgebracht und insbesondere aufgesprüht. Hierbei bietet es sich an, daß der eingesetzte und Butylacetat aufweisende Extrakt das 10-Deacetylbaccatin III (10-DAB) in einer Konzentration zwischen 3 Gew.% und 20 Gew.% enthält, so daß dann nach der Auftrennung durch das erfindungsgemäße Verfahren ein hochreines 10-Deacetylbaccatin III (10-DAB) anfällt, das weniger als 20 Gew.% und insbesondere weniger als 8 Gew.% bis 2 Gew.% Verunreinigungen aufweist.

Um durch das erfindungsgemäße Verfahren die zuvor beschriebene Isolierung des 10-Deacetylbaccatins III (10-DAB) in hochreiner Form zu ermöglichen, wird hierbei vorzugsweise als Trennphase Silica-Gel und als Eluierungsfluid ein Alkohol und/oder ein Alkoholgemisch, insbesondere ein C₁-C₄-Alkohol und/oder ein C₁-C₄-Alkoholgemisch, verwendet.

Besonders eignet sich das erfindungsgemäße Verfahren auch dann, wenn es sich bei dem zu trennenden Gemisch um Rohlecithin, insbesondere das aus Sojabohnen gewonnene Rohlecithin, handelt. So lassen sich durch Anwendung des erfindungsgemäßen Verfahrens aus Rohlecithin oder Reinlecithin bestimmte Einzelbestandteile oder Fraktionen von Einzelbestandteilen isolieren, wie dies nachfolgend noch konkret an bestimmten Ausführungsbeispielen beschrieben ist.

Hierbei wird unter dem Begriff Rohlecithin, insbesondere Sojalecithin, ein Gemisch verstanden, das die nachfolgende Zusammensetzung aufweist:
12 - 21 Gew.% Phosphatidylcholin,
12 - 20 Gew.% Phosphatidylethanolamin,
8 - 14 Gew.% Phosphatidylinositol,
8 - 14 Gew.% Phosphatidsäure
2 - 5 Gew.% N-Acyl-Phosphatidyl-Ethanolamin,
26 - 51 Gew.% Öl,
5 - 10 Gew.% andere Phospholipide,
5 - 10 Gew.% Glycolipide sowie
2 - 5 Gew.% Sterole, Kohlehydrate, Wasser oder sonstige Verunreinigungen.

Gegenüber dem zuvor beschriebenen Rohlecithin weist das ebenfalls beim erfindungsgemäßen Verfahren als Gemisch eingesetzte entölte Rohlecithin, das auch als Reinlecithin oder Lecithingranulat bezeichnet wird, einen Phosphatidylcholingehalt auf, der zwischen 15 Gew.% und 35 Gew.% variiert, während ansonsten mit Ausnahme der vorstehend genannten Ölkonzentration die übrigen Bestandteile (Phosphatidylethanolamin, Phosphatidylinositol, Phosphatidsäure, N-Acyl-Phosphatidylethanolamin, andere Phospholipide) in den vorstehend beim Rohlecithin angegebenen Massenverhältnissen liegen. Aus diesem Lecithin (Roh- oder Reinlecithin) können dann beispielsweise durch Anwendung des erfindungsgemäßen Verfahrens in Abhängigkeit von den jeweils angewendeten Prozeßparametern, insbesondere der verwendeten Trennphase, der Temperatur, der Transportgeschwindigkeit der Trennphase, des für die Eluierung eingesetzten Lösungsmittels und/oder der Schichtdicke der Trennphase, nicht nur Einzelprodukte, wie beispielsweise Phospholipide mit einer Konzentration von mindestens 90 Gew.% Phosphatidylcholin, sondern auch bestimmte, in ihrer Zusammensetzung definierte Fraktionen isoliert werden, wie insbesondere Fraktionen, die
77 - 87 Gew.% Phosphatidylcholin,
0 - 4 Gew.% Phosphatidylethanolamin,
0 - 4 Gew.% Phosphatidylinositol,
0 - 1 Gew.% Phosphatidsäure,
1 - 5 Gew.% Öl sowie
0 - 22 Gew.% andere Begleitstoffe;
   oder
65 - 85 Gew.% Phosphatidylcholin,
0 - 8 Gew.% Phosphatidylethanolamin,
0 - 4 Gew.% Phosphatidylinositol,
0 - 10 Gew.% Phosphatidsäure,
0 - 10 Gew.% Öl sowie
0 - 35 Gew.% andere Begleitstoffe
   oder
73 - 93 Gew.% Phosphatidylcholin,
0 - 6 Gew.% Phosphatidylethanolamin,
0 - 4 Gew.% Phosphatidylinositol,
0 - 10 Gew.% Phosphatidsäure,
0 - 5 Gew.% Öl sowie
0 - 27 Gew.% andere Begleitstoffe beinhalten.

Wie bereits vorstehend herausgestellt wurde, wird insbesondere bei dem erfindungsgemäßen Verfahren als Eluierungsfluid ein Alkohol und/oder ein Alkoholgemisch, vorzugsweise ein C₁-C₄-Alkohol und/oder ein C₁-C₄-Alkoholgemisch, eingesetzt.

Bezüglich der bei dem erfindungsgemäßen Verfahren anzuwendenden Temperatur ist festzuhalten, daß das erfindungsgemäße Verfahren insbesondere eine beliebige Temperatureinstellung in den einzelnen Stationen ermöglicht, wobei diese Temperatureinstellung dann auf das jeweils zu trennende Gemisch und das für die Eluierung eingesetzte Lösungsmittel abgestimmt wird. Üblicherweise variiert die Temperatur bei der Eluierung zwischen 10 °C und 60 °C, vorzugsweise zwischen 20 °C und 35 °C.

Vorteilhafte Weiterbildungen des erfindungsgemäßen Verfahrens sind in den Unteransprüchen angegeben.

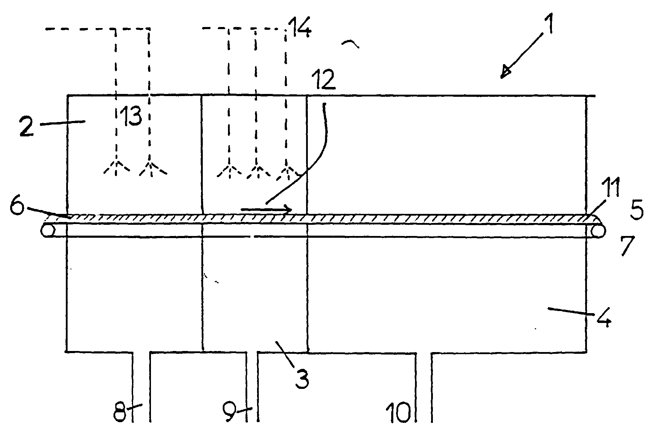

Eine zur Durch führung des erfindungsgemäßen Verfahrens verwendete Vorrichtung wird nachfolgend in Verbindung mit der Zeichnung, die eine schematische Ansicht zeigt, näher erläutert.

Das erfindungsgemäße Verfahren wird nachfolgend anhand von fünf Ausführungsbeispielen im Detail erklärt.

Die in der einzigen Figur der Zeichnung abgebildete und insgesamt mit 1 bezeichnete Vorrichtung weist eine erste Kammer 2, eine zweite Kammer 3 sowie ein weitere Kammer 4 auf, wobei sich ein endloses Förderband 5 vom Einlaß 6 der ersten Kammer 2 bis zum Auslaß 7 der weiteren Kammer 4 erstreckt. Jede der Kammern 2, 3 und 4 sind mit einer Ablaßöffnung 8, 9 bzw. 10 verbunden, wobei die Ablaßöffnungen 8 bis 10 in entsprechende Tanks münden, die jedoch nicht gezeigt sind.

Das endlose Förderband 5 wird am Einlaß 6 der ersten Kammer 2 über eine nicht gezeigte Auftragseinrichtung mit einer Trennphase 11 belegt, wobei die nicht gezeigte Auftragseinrichtung so ausgebildet ist, daß die Trennphase 11 im trockenen Zustand auf das Förderband 5 aufgebracht wird. Hierbei ist die Schichtdicke und die Schüttdichte der Trennphase 11 einstellbar.

In der ersten Kammer 2 wird die mittels des Förderbandes 5 kontinuierlich in Pfeilrichtung 12 transportierte Trennphase mit der Lösung, Dispersion und/oder Emulsion des aufzutretenden Gemisches über entsprechende Dosierdüsen 13 bedüst, wobei sie die Dosierdüsen 13 quer über die gesamte Breite der Trennphase 11 erstrecken.

Bedingt dadurch, daß die erste Kammer 2 unter Vakuum über die Abflußöffnung 8 gesetzt ist, verdampft ein Teil des Fluids, das für die Herstellung der Lösung, Dispersion und/oder Emulsion des zu trennenden Gemisches verwendet worden ist.

Nachdem die nunmehr mit dem Gemisch beladene Trennphase in die zweite Kammer 3 transportiert ist, wird die Trennphase dort mit einem geeigneten Elutionsmittels beaufschlagt. Hierzu weist die Kammer 3 drei beispielhaft gezeigte Düseneinrichtungen 14 auf, die sich quer zur Transportrichtung der Trennphase 11 erstrecken und die ein Eluierung eines einzelnen Bestandteiles oder einer Fraktion aus dem Gemisch bewirken. Hierbei fällt an der Ablaßöffnung 9 der in dem Elutionsmittel enthaltene Bestandteil bzw. die in dem Elutionsmittel enthaltene Fraktion des Gemisches an und kann in dem nicht gezeigten Tank zwischengelagert und entsprechend aufgearbeitet werden.

In der weiteren Kammer 4, die bei der gezeigten Vorrichtung als Trockenkammer ausgebildet ist, wird die Trennphase 11 unter Vakuum gesetzt und erwärmt, was zur Folge hat, daß alle Rückstände des Elutionsmittels entfernt werden.

Am Auslaß 7 fällt somit eine Trennphase 11 an, die bei der gezeigten Vorrichtung noch mit den Bestandteilen bzw. Fraktionen des Gemisches beladen ist, die nicht isoliert werden sollen. Von daher kann diese restbeladene Trennphase entweder regeneriert oder verworfen werden. Sollte es jedoch erwünscht sein, auch diese Restbestandteile des Gemisches zu isolieren, ist es lediglich erforderlich, zwischen der zweiten Kammer 3 und der weiteren Kammer 4 eine entsprechende Anzahl von Kammern vorzusehen, die wie die zweite Kammer 3 aufgebaut sind.

### Ausführungsbeispiel 1

Eine 50 Gew.%ige Lösung des Gemisches A in Ethanol würde auf der zuvor beschriebenen Vorrichtung behandelt. Hierbei wurde als Trennphase Aluminiumoxid in einer Schichtdicke von 8 cm vorgesehen, wobei das Transportband eine Breite von 1 m aufwies und mit einer Geschwindigkeit von 10 m/h durch die Kammern 2 bis 4 transportiert wurde.

In der ersten Kammer 2 wurden 700 kg der 50 Gew.%igen Lösung des Gemisches A in Ethanol/h auf die Trennphase aufgedüst.

In der zweiten Kammer 3 wurde die mit dem Gemisch A beladene Trennphase mit 700 kg Ethanol/h bedüst.

Das hierbei anfallende und über die Abzugsöffnung 9 abgezogene Eluat enthielt ein Gemisch B, wobei die Zusammensetzung der Gemische A und B nachfolgend wiedergegeben sind.

Zusammensetzung Gemisch A (vor der Behandlung)
77 - 86 Gew.% Phosphatidylcholin
0 - 4 Gew.% Phosphatidylethanolamin
0 - 4 Gew.% Phosphatidylinositol
3 - 6 Gew.% Phosphatidsäure
1 - 5 Gew.% Sojaöl
0 - 19 Gew.% andere Begleitstoffe

Zusammensetzung Gemisch B (nach der Behandlung)
77 - 86 Gew.% Phosphatidylcholin
0 - 4 Gew.% Phosphatidylethanolamin
0 - 4 Gew.% Phosphatidylinositol
0 - 1 Gew.% Phosphatidsäure
1 - 5 Gew.% Sojaöl
0 - 22 Gew.% andere Begleitstoffe.

Wie dem Vergleich der zuvor wiedergegebenen Zusammensetzungen der Gemische A und B eindeutig zu entnehmen ist, wurde durch die Behandlung die Konzentration an unerwünschter Phosphatidsäure drastisch reduziert.

Nach der Eluierung der Trennphase wurde die ethanolfeuchte Trennphase in der Trockenkammer 4 unter Vakuum auf eine Temperatur von 80 °C erwärmt, was dazu führte, daß das Ethanol restlos aus der Trennphase ausgetrieben wurde und somit eine trockene Trennphase, die entsprechende verworfen wurde, anfiel.

### Ausführungsbeispiel 2

Eine 20 Gew.%ige Lösung des Gemisches C in Ethanol wurde auf der zuvor beschriebenen Vorrichtung behandelt. Hierbei wurde als Trennphase Aluminiumoxid in einer Schichtdicke von 8 cm vorgesehen, wobei das Transportband eine Breite von 1 m aufwies und mit einer Geschwindigkeit von 10 m/h durch die Kammern 2 bis 4 transportiert wurde.

In der ersten Kammer 2 wurden 2.250 kg der 20 Gew.%igen Lösung des Gemisches A in Ethanol/h auf die Trennphase aufgedüst und kontinuierlich abgesaugt.

In der zweiten Kammer 3 wurde die mit dem Gemisch C beladene Trennphase mit 1.000 kg Ethanol/h nachgespült.

Das hierbei anfallende und über die Abzugsöffnungen 8 und 9 abgezogene Eluat enthielt ein Gemisch D, wobei die Zusammensetzung der Gemische C und D nachfolgend wiedergegeben sind.

Zusammensetzung Gemisch C (vor der Behandlung)
77 - 86 Gew.% Phosphatidylcholin
0 - 4 Gew.% Phosphatidylethanolamin
0 - 4 Gew.% Phosphatidylinositol
3 - 6 Gew.% Phosphatidsäure
1 - 5 Gew.% Sojaöl
0 - 19 Gew.% andere Begleitstoffe

Zusammensetzung Gemisch D (nach der Behandlung)
90 - 96 Gew.% Phosphatidylcholin
0 Gew.% Phosphatidylethanolamin
0 Gew.% Phosphatidylinositol
0 Gew.% Phosphatidsäure
1 - 3 Gew.% Sojaöl
0 - 7 Gew.% andere Begleitstoffe.

Wie dem Vergleich der zuvor wiedergegebenen Zusammensetzungen der Gemische C und D eindeutig zu entnehmen ist, wurden durch die Behandlung die Begleitphospholipide Phosphatidylethanolamin, Phosphatidylinositol und Phosphatidsäure entfernt.

Desweiteren wurde die Konzentration an anderen Begleitstoffen erheblich reduziert.

Nach der Eluierung der Trennphase wurde die ethanolfeuchte Trennphase in der Trockenkammer 4 unter Vakuum auf eine Temperatur von 80 °C erwärmt, was dazu führte, daß das Ethanol restlos aus der Trennphase ausgetrieben wurde und somit eine trockene Trennphase, die entsprechende verworfen wurde, anfiel.

### Ausführungsbeispiel 3

Eine 8 Gew.%ige Lösung des Gemisches E in Ethanol wurde auf der zuvor beschriebenen Vorrichtung behandelt. Hierbei wurde als Trennphase Aluminiumoxid in einer Schichtdicke von 8 cm vorgesehen, wobei das Transportband eine Breite von 1 m aufwies und mit einer Geschwindigkeit von 10 m/h durch die Kammern 2 bis 4 transportiert wurde.

In der ersten Kammer 2 wurden 3.600 kg der 8 Gew.%igen Lösung des Gemisches E in Ethanol/h auf die Trennphase aufgedüst.

In der zweiten Kammer 3 wurde die mit dem Gemisch E beladene Trennphase mit 1.000 kg Ethanol/h nachgespült.

Das hierbei anfallende und über die Abzugsöffnung 9 abgezogene Eluat enthielt ein Gemisch F, wobei die Zusammensetzung der Gemische E und F nachfolgend wiedergegeben sind.

Zusammensetzung Gemisch E (vor der Behandlung)
45 - 55 Gew.% Phosphatidylcholin
12 - 20 Gew.% Phosphatidylethanolamin
0 - 8 Gew.% Phosphatidylinositol
2 - 8 Gew.% Phosphatidsäure
1 - 5 Gew.% Sojaöl
0 - 5 Gew.% andere Begleitstoffe

Zusammensetzung Gemisch F (nach der Behandlung)
70 - 80 Gew.% Phosphatidylcholin
0 - 12 Gew.% Phosphatidylethanolamin
0 - 6 Gew.% Phosphatidylinositol
0 - 1 Gew.% Phosphatidsäure
1 - 3 Gew.% Sojaöl
0 - 8 Gew.% andere Begleitstoffe.

Wie dem Vergleich der zuvor wiedergegebenen Zusammensetzungen der Gemische E und F eindeutig zu entnehmen ist, wurde durch die Behandlung die Konzentration an Phosphatidylcholin deutlich erhöht.

Nach der Eluierung der Trennphase wurde die ethanolfeuchte Trennphase in der Trockenkammer 4 unter Vakuum auf eine Temperatur von 80 °C erwärmt, was dazu führte, daß das Ethanol restlos aus der Trennphase ausgetrieben wurde und somit eine trockene Trennphase, die entsprechende verworfen wurde, anfiel.

### Ausführungsbeispiel 4

Eine 50 Gew.%ige Lösung des Gemisches G in Ethanol wurde auf der zuvor beschriebenen Vorrichtung behandelt. Hierbei wurde als Trennphase Siliciumdioxid in einer Schichtdicke von 12,5 cm vorgesehen, wobei das Transportband eine Breite von 1 m aufwies und mit einer Geschwindigkeit von 10 m/h durch die Kammern 2 bis 4 transportiert wurde.

In der ersten Kammer 2 wurden 3.000 kg der 30 Gew.%igen Lösung des Gemisches G in Ethanol/h auf die Trennphase aufgedüst.

In der zweiten Kammer 3 wurde die mit dem Gemisch G beladene Trennphase mit 2.000 kg Ethanol/h bedüst.

In der dritten Kammer 4 wurde die mit dem Gemisch beladene Trennphase mit 7.000 kg Ethanol eluiert.

Das hierbei anfallende und über die Abzugsöffnung 10 abgezogene Eluat enthielt ein Gemisch H, wobei die Zusammensetzung der Gemische G und H nachfolgend wiedergegeben sind.

Zusammensetzung Gemisch G (vor der Behandlung)
16 - 36 Gew.% Phosphatidylcholin
0 - 20 Gew.% Phosphatidylethanolamin
0 - 8 Gew.% Phosphatidylinositol
3 - 10 Gew.% Phosphatidsäure
25 - 40 Gew.% Sojaöl
0 - 6 Gew.% andere Begleitstoffe

Zusammensetzung Gemisch H (nach der Behandlung)
77 - 86 Gew.% Phosphatidylcholin
0 - 4 Gew.% Phosphatidylethanolamin
0 - 4 Gew.% Phosphatidylinositol
3 - 6 Gew.% Phosphatidsäure
1 - 5 Gew.% Sojaöl
0 - 19 Gew.% andere Begleitstoffe.

Wie dem Vergleich der zuvor wiedergegebenen Zusammensetzungen der Gemische G und H eindeutig zu entnehmen ist, wurde durch die Behandlung die Konzentration an Phosphatidylcholin deutlich erhöht.

Nach der Eluierung der Trennphase wurde die ethanolfeuchte Trennphase in der Trockenkammer 4 unter Vakuum auf eine Temperatur von 80 °C erwärmt, was dazu führte, daß das Ethanol restlos aus der Trennphase ausgetrieben wurde und somit eine trockene Trennphase, die entsprechende verworfen wurde, anfiel. Die Trennphase kann ethanolfeucht wieder eingesetzt werden.

### Ausführungsbeispiel 5

Eine 70 %ige Lösung eines getrockneten Extraktes, gewonnen durch Extraktion von Eibennadeln mit Methanol, wurde in Butylacetat hergestellt und auf der zuvor beschriebenen Vorrichtung behandelt. Hierbei wurde als Trennphase Silica-Gel (Compalox) in einer Schichtdicke von 10 cm auf dem Transportband vorgesehen, wobei das Transportband eine Breite von 1 m aufwies und mit einer Geschwindigkeit von 5 m/h durch die Kammern 2 bis 4 transportiert wurde.

In der ersten Kammer 2 wurden 100 kg der zuvor beschriebenen 70 %igen Lösung in Butylacetat pro Stunde auf die Trennphase aufgedüst.

In der zweiten Kammer 3 wurde die mit dem Gemisch beladene Trennphase mit 300 kg Methanol/h bedüst.

Das hierbei anfallende und über die Abzugsöffnung 9 abgezogene Eluat wurde verworfen.

In der dritten Kammer 4 wurde die mit dem Gemisch beladene Trennphase bei 30 °C ± 5 °C mit einem Lösungsmittelgemisch (Methanol:Aceton:Essigester; V:V:V; 70 % : 15 % : 15 %) eluiert, wobei der Durchsatz dieses Lösungsmittelgemisches 500 kg pro Stunde betrug.

Das hierbei anfallende und über die Abzugsöffnung 10 aus der Kammer 4 abgezogene Eluat bestand neben dem zuvor wiedergegebenen Lösungsmittel überwiegend aus 10-Deacetylbaccatin III (10-DAB), wobei das 10-Deacetylbaccatin III einen Reinheitsgrad von 97 Gew.% aufwies.

Die im Ausführungsbeispiel 5 in der ersten Kammer aufgetragene und aufzutrennende 70 %ige Ausgangslösung des Extraktes wies maximal zwischen 4 Gew.% und 5 Gew.% 10-Diacetylbaccatin III (10-DAB) auf.

## Patentansprüche

1. Verfahren zum Auftrennen eines mindestens zwei Bestandteile aufweisenden Gemisches, bei dem eine auf einem Förderband angeordnete feste Trennphase mit dem zu trennenden Gemisch beaufschlagt und anschließend die mit dem Gemisch beladene Trennphase mit mindestens einem Fluid eluiert wird und bei dem die Trennphase von einer ersten Station, in der sie mit dem zu trennenden Gemisch beaufschlagt wird, zu mindestens einer zweiten Station, in der die Trennphase mit dem mindestens einem Fluid eluiert wird, mittels eines Förderbandes transportiert wird, wobei die Trennphase kontinuierlich mit dem Gemisch beladen und kontinuierlich mit dem Fluid eluiert wird, dadurch gekennzeichnet, daß die feste Trennphase auf dem Förderband in einer Schichtdicke zwischen 0,1 cm und 30 cm, vorzugsweise zwischen 2 cm und 15 cm, angeordnet wird, daß in der ersten Station so viel von der Lösung, Dispersion und/oder Emulsion des zu trennenden Gemisches auf die horizontal vorliegende Trennphase aufgebracht wird, daß die Lösung, Dispersion und/oder Emulsion des zu trennenden Gemisches über die Dicke der Trennphase gesehen nur den äußeren oberen Bereich der Trennphase netzt, so daß das zu trennende Gemisch etwa 5 % bis 25 % der Schichtdicke der Trennphase einnimmt und daß als zu trennendes Gemisch ein Extrakt eines Naturstoffes eingesetzt wird.

2. Verfahren nach Anspruch 1, dadurch gekennzeichnet, daß die Lösung, Emulsion und/oder Dispersion des zu trennenden Gemisches auf die Trennphase aufgesprüht wird.

3. Verfahren nach Anspruch 1 oder 2, dadurch gekennzeichnet, daß zwischen der ersten Station und der zweiten Station die mit dem Gemisch beaufschlagte Trennphase getrocknet wird.

4. Verfahren nach einem der vorangehenden Ansprüche, dadurch gekennzeichnet, daß im Anschluß an die zweite Station eine Vielzahl von weiteren Stationen vorgesehen wird, wobei die Trennphase auch durch diese weiteren Stationen transportiert wird, vorzugsweise kontinuierlich transportiert wird, und die Trennphase in den weiteren Stationen mit mindestens einem weiteren Fluid eluiert wird.

5. Verfahren nach einem der vorangehenden Ansprüche, dadurch gekennzeichnet, daß die Trennphase während ihres Transportes mit einem Inertgas umspült wird.

6. Verfahren nach einem der vorangehenden Ansprüche, dadurch gekennzeichnet, daß die Trennphase nach Abschluß der Eluierung regeneriert und/oder getrocknet wird.

7. Verfahren nach einem der vorangehenden Ansprüche, dadurch gekennzeichnet, daß als Trennphase Kieselgel, Kieselgur und/oder Aluminiumoxid verwendet wird.

8. Verfahren nach einem der vorangehenden Ansprüche, dadurch gekennzeichnet, daß die Beaufschlagung der Trennphase mit dem zu trennenden Gemisch und/oder die Eluierung der mit dem Gemisch beaufschlagten Trennphase mit dem Fluid unter Unterdruck durchgeführt wird.

9. Verfahren nach einem der vorangehenden Ansprüche, dadurch gekennzeichnet, daß als zu trennendes Gemisch ein Pflanzenextrakt verwendet wird.

10. Verfahren nach Anspruch 9, dadurch gekennzeichnet, daß als zu trennendes Gemisch ein Extrakt, gewonnen durch Extraktion von Bestandteilen der Eibenpflanze, vorzugsweise ein Eibennadelextrakt, eingesetzt wird.

11. Verfahren nach Anspruch 10, dadurch gekennzeichnet, daß der eingesetzte, zu trennende Extrakt als Lösungsmittel Butylacetat aufweist.

12. Verfahren nach Anspruch 10 oder 11, dadurch gekennzeichnet, daß der eingesetzte und zu trennende Extrakt zwischen 3 Gew.% und 20 Gew.% 10-Deacetylbaccatin III (10-DAB) enthält.

13. Verfahren nach einem der Ansprüche 10 bis 12, dadurch gekennzeichnet, daß als Trennphase Silica-Gel und als Eluierungsfluid ein Alkohol und/oder ein Alkoholgemisch, insbesondere ein C₁-C₄-Alkohol und/oder ein C₁-C₄-Alkoholgemisch, verwendet wird.

14. Verfahren nach einem der Ansprüche 1 bis 9, dadurch gekennzeichnet, daß als zu trennendes Gemisch ein Roh- oder Reinlecithin eingesetzt wird.

15. Verfahren nach Anspruch 14, dadurch gekennzeichnet, daß das Roh- oder Reinlecithin ein aus Soja-Bohnen gewonnenes Lecithin ist.

16. Verfahren nach Anspruch 14 oder 15, dadurch gekennzeichnet, daß als Trennphase Aluminiumoxid und als Eluierungsfluid ein Alkohol und/oder ein Alkoholgemisch, insbesondere ein C₁-C₄-Alkohol und/oder ein C₁-C₄-Alkoholgemisch, verwendet wird.

17. Verfahren nach einem der vorangehenden Ansprüche, dadurch gekennzeichnet, daß die Trennung bei einer Temperatur zwischen 10 °C und 60 °C durchgeführt wird.

## Claims

1. A method for the separation of a mixture containing at least two components, whereby a solid separation phase arranged on a conveyor belt is charged with the mixture to be separated and whereafter the separation phase charged with the mixture is eluted with at least one fluid, whereby the separation phase is transported by the conveyor belt from a first station in which it is charged with a mixture to be separated to at least one second station in which the separation phase is eluted with the at least one fluid, whereby the separation phase is continuously charged with the mixture and continuously eluted with the fluid, characterized in that the solid separation phase is arranged on the conveyor belt in a layer thickness of between 0,1 cm and 30 cm, preferably between 2 cm and 15 cm, that in the first station a solution, dispersion and/or emulsion of the mixture to be separated is applied onto the horizontal separation phase in such a quantity that the solution, dispersion and/or emulsion only perfuses the exterior and upper region of the separation phase so that the mixture to be separated preferably covers about 5 % to 25 % of the separation phase, relatively to the thickness of its layer, and that an extract of a natural product is used as mixture to be separated.

2. The method according to claim 1, characterized in that a solid separation phase is used as separation phase.

3. The method according to claim 1 or 2, characterized in that the separation phase charged with the mixture is dried between the first station and the second station.

4. The method according to one of the preceding claims, characterized in that a plurality of further stations is arranged in connection to the second station, that the separation phase is also transported, preferably continuously transported, through these further stations, and that the separation phase is eluted with at least one further fluid in the further stations.

5. The method according to one of the preceding claims, characterized in that an inert gas flows round the separation phase during the transport of the separation phase.

6. The method according to one of the preceding claims, characterized in that the separation phase is regenerated and/or dried after the elution.

7. The method according to one of the preceding claims, characterized in that silica gel, infusorial earth and/or aluminium oxide is used as a separation phase.

8. The method according to one of the preceding claims, characterized in that the charging of the separation phase with the mixture to be separated and/or that the fluid elution of the separation phase charged with the mixture is carried out under a vacuum.

9. The method according to one of the preceding claims, characterized in that a plant extract is used as mixture to be separated.

10. The method according to claim 9, characterized in that an extract obtained by the extraction of yew plant components, preferably yew needle extract, is used as mixture to be separated.

11. The method according to claim 10, characterized in that the used extract to be separated contains butyl acetate as a solvent.

12. The method according to claim 10 or 11, characterized in that the used extract to be separated contains between 3 % by weight and 20 % by weight 10-deacetylbaccatin III (10-DAB).

13. The method according to one of the claims 10 to 12, characterized in that silica gel is used as separation phase and that an alcohol and/or an alcohol mixture, preferably a C₁-C₄-alcohol and/or a C₁-C₄-alcohol mixture, is used as a elution fluid.

14. The method according to one of the claims 1 to 9, characterized in that a crude lecithin or a pure lecithin is used as mixture to be separated.

15. The method according to claim 14, characterized in that the crude lecithin or the pure lecithin is a lecithin obtained from soybeans.

16. The method according to claim 14 or 15, characterized in that aluminium oxide is used as a separation phase and that an alcohol and/or an alcohol mixture, preferably a C₁-C₄-alcohol and/or a C₁-C₄-alcohol mixture, is used as a elution fluid.

17. The method according to one of the preceding claims, characterized in that the separation is carried out at a temperature of between 10 °C and 60 °C.

## Revendications

1. Procédé pour la séparation d'un mélange comportant au moins deux constituants, selon lequel une phase de séparation solide placée sur une bande transporteuse est admise avec le mélange à séparer, que la phase de séparation chargée du mélange est ensuite éluée par au moins un fluide, et que la phase de séparation est transportée, par une bande transporteuse, d'un premier poste où elle est admise avec le mélange à séparer, à au moins un deuxième poste, où la phase de séparation est éluée par au moins un fluide, la phase de séparation étant en continu chargée du mélange et éluée en continu par le fluide, caractérisé en ce que la phase de séparation solide est disposée sur la bande transporteuse en une épaisseur de couche de 0,1 à 30 cm, de préférence de 2 à 15 cm, que dans le premier poste est appliquée sur la phase de séparation en position horizontale une quantité de la solution, de la dispersion et/ou de l'émulsion du mélange à séparer telle que la solution, la dispersion et/ou l'émulsion du mélange à séparer ne mouille sur l'épaisseur de la phase de séparation que la partie extérieure de la phase de séparation, de sorte que le mélange à séparer occupe environ de 5% à 25% de l'épaisseur de couche de la phase de séparation et que l'on utilise comme mélange à séparer un extrait d'une substance naturelle.

2. Procédé selon la revendication 1, caractérisé en ce que la solution, l'émulsion et/ou la dispersion du mélange à séparer est pulvérisée sur la phase de séparation.

3. Procédé selon la revendication 1 ou 2, caractérisé en ce que la phase de séparation admise avec le mélange est séchée entre le premier poste et le deuxième poste.

4. Procédé selon l'une des revendications qui précèdent, caractérisé en ce qu'au deuxième poste est reliée une multiplicité d'autres postes, la phase de séparation étant également transportée par ces postes, de préférence transportée en continu, et que la phase de séparation est éluée dans les autres postes par au moins un autre fluide.

5. Procédé selon l'une des revendications qui précèdent, caractérisé en ce que la phase de séparation est baignée par un gaz inerte pendant son transport.

6. Procédé selon l'une des revendications qui précédent, caractérisé en ce que la phase de séparation est régénérée et/ou séchée au terme de l'élution.

7. Procédé selon l'une des revendications qui précédent, caractérisé en ce que l'on utilise comme phase de séparation du gel de silice, de la terre de diatomées et/ou de l'oxyde d'aluminium.

8. Procédé selon l'une des revendications qui précèdent, caractérisé en ce que l'admission de la phase de séparation avec le mélange à séparer et/ou l'élution de la phase de séparation admise avec le mélange au moyen du fluide sont effectuées sous dépression.

9. Procédé selon l'une des revendications qui précèdent, caractérisé en ce que l'on utilise comme mélange à séparer un extrait végétal.

10. Procédé selon la revendication 9, caractérisé en ce que l'on met en oeuvre, en tant que mélange à séparer, un extrait obtenu par extraction de constituants de conifères, de préférence un extrait d'aiguilles d'if.

11. Procédé selon la revendication 10, caractérisé en ce que l'extrait à séparer mis en oeuvre présente comme solvant de l'acétate de butyle.

12. Procédé selon la revendication 10 ou 11, caractérisé en ce que l'extrait mis en oeuvre et à séparer contient de 3% en poids à 20% en poids de 10-déacétylbaccatine (10-DAB).

13. Procédé selon l'une des revendications 10 à 12, caractérisé en ce que l'on utilise en tant que phase de séparation du gel de silice et, en tant que fluide éluant, un alcool et/ou un mélange d'alcools, en particulier un alcool en C₁-C₄ et/ou un mélange d'alcools en C₁-C₄.

14. Procédé selon l'une des revendications 1 à 9, caractérisé en ce que l'on met en oeuvre en tant que mélange à séparer une lécithine brute ou pure.

15. Procédé selon la revendication 14, caractérisé en ce que la lécithine brute ou pure est une lécithine de soja.

16. Procédé selon la revendication 14 ou 15, caractérisé en ce que l'on utilise comme phase de séparation de l'oxyde d'aluminium et comme fluide d'élution un alcool et/ou un mélange d'alcools, en particulier un alcool en C₁-C₄ et/ou un mélange d'alcools en C₁-C₄.

17. Procédé selon l'une des revendications qui précèdent, caractérisé en ce que la séparation est effectuée à une température entre 10°C et 60°C.
